# EUROPEAN PATENT SPECIFICATION

(11) **EP 3 654 678 B1**
(45) Date of publication and mention of the grant of the patent: **09.03.2022**
(21) Application number: 19206994.6
(22) Date of filing: 04.11.2019
(51) Int. Cl.: H04W 4/90

(54) **SYSTEM, DEVICE, AND METHOD FOR RECOMMENDING PUBLIC SAFETY RESOURCE ALLOCATION**
SYSTEM, GERÄT UND VERFAHREN ZUR EMPFEHLUNG DER ÖFFENTLICHEN SICHERHEITSRESSOURCENZUORDNUNG
SYSTÈME, DISPOSITIF ET PROCÉDÉ POUR RECOMMANDER UNE ATTRIBUTION DE RESSOURCES DE SÉCURITÉ PUBLIQUE

(30) Priority: 14.11.2018 US 201816190457
(43) Date of publication of application: 20.05.2020
(73) Proprietor: Motorola Solutions, Inc., Chicago, IL 60661 (US)
(72) Inventor: SCHULER, Francesca, Palatine, IL Illinois 60067 (US); BALLENGEE, Gail G., Island Lake, IL Illinois 60042 (US); FROMMELT, Brian J., Deer Park, IL Illinois 60010 (US)
(74) Representative: Wojakiewicz, Aleksandra

(56) References cited:
- US-A1- 2010 332 131
- US-A1- 2012 256 745
- US-A1- 2012 320 912
- US-A1- 2018 189 913

## Description

### BACKGROUND OF THE INVENTION

Public safety agencies (for example, police stations, fire stations, dispatch centers, and the like) may receive information from various sources regarding potential public safety incidents. For example, public safety agencies may receive information regarding potential public safety incidents via an emergency communication channel (for example, 9-1-1), a non-emergency communication channel (for example, 3-1-1), a tip line communication channel, and the like. In response to received information regarding a potential public safety incident, a public safety dispatcher may instruct one or more public safety officers to respond to the potential public safety incident. US2012/256745 describes a public safety analysis system for evaluating social media posts and other data in real time to infer the occurrence of a public safety incident. US2018/189913 describes using mobile crowdsourcing for beneficial real time data gathering that may provide insight into ongoing events, crises or natural disasters. US2010/332131 describes systems that provide a risk-based assessment for a user based on user location information. Incident data is acquired for incidents and matched to the users location and context to provide one or more potential outcomes of interest and inferences regarding the likelihood of events are also made available. US2012/320912 describes a system configured to efficiently accept emergency information such as voice, text, video messages which can correlate the information in a meaningful way to provide situational awareness to a given input, set of inputs and overall incident.

### BRIEF DESCRIPTION OF THE SEVERAL VIEWS OF THE DRAWINGS

The invention is defined by a computing device and a method in accordance with the appended claims 1 and 10. Preferred embodiments are defined in the dependent claims.

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments
FIG. 1 is a block diagram of a communication system according to one example embodiment.
FIG. 2 is a block diagram of command centers included in the communication system of FIG. 1 according to one example embodiment.
FIG. 3 is a block diagram of a communication device included in the command centers of FIG. 2 according to one example embodiment.
FIG. 4 is a block diagram of a communication device manager included in the command centers of FIG. 2 according to one example embodiment.
FIG. 5 is a flow chart of a method for recommending public safety resource allocation according to one example embodiment.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION OF THE INVENTION

As mentioned above, public safety agencies may receive information from various sources regarding potential public safety incidents (for example, a fire, a robbery, a vehicle accident, a bomb threat, and the like), and a public safety dispatcher may instruct one or more public safety officers to respond to a potential public safety incident. However, different public safety officers often monitor different sources of information. For example, tips received via a tip line communication channel are often handled by a police department while emergency calls from civilians received via an emergency communication channel are often handled by a public safety answering point (PSAP) such as a dispatch center. In some situations, the different sources of information may provide information related to the same public safety incident. For example, a tip from a police informant may be related to a robbery at a bank, and an emergency call from a civilian may also be related to the robbery at the bank. As another example, a single dispatch center may receive multiple emergency calls related to the robbery at the bank, but each call may be handled by a different dispatcher.

In view of the multiple sources of information being handled by different public safety officers and at potentially different locations, each public safety officer (for example, dispatcher) assigning public safety resources to respond to a potential public safety incident may be doing so based on different information with different reliability levels of the information. Additionally, one public safety officer assigning public safety resources may not be aware of the presence of previously-stored information regarding a caller or of other information from a different source that is related to the same public safety incident. Thus, public safety resources (for example, public safety officers on patrol or in the field, police dogs, fire trucks, ambulances, and the like) are often allocated improperly. For example, a police officer with specialized training in narcotics may be dispatched to a robbery while a police officer without specialized training in narcotics is dispatched to a public safety incident involving drug activity. Thus, there is a technological problem with respect to allocating public safety resources and determining which information to use when allocating public safety resources (in other words, determining the reliability of received information).

Disclosed are, among other things, a method, device, and system for one or more electronic processors to recommend and/or perform public safety resource allocation. In some embodiments, the one or more electronic processors receive a data feed that includes information related to a public safety incident and determine a trust score for the data feed. Based on the trust score, in some embodiments, the one or more electronic processors identify a public safety resource to respond to the public safety incident and provide a recommendation that the public safety resource respond to the public safety incident. In some embodiments, the one or more electronic processors assign the identified public safety resource to respond to the public safety incident in addition to or as an alternative to providing the recommendation.

The disclosed method, device, and system solve the above-noted technological problem by using a set of rules to determine a trust score for received data feeds. The trust score indicates the reliability of the information received in the data feed which may allow the system to more accurately determine the circumstances of a public safety incident. The disclosed method, device, and system also use a set of rules to determine which public safety resources to allocate based on the trust score of a data feed. Thus, the system performs resource allocation in a systematic and efficient manner. For example, through the use of the sets of rules, the disclosed method, device, and system systematically determine which received information to use when allocating public safety resources and also recommend and/or assign public safety resource allocation. Additionally, the disclosed method, device, and system may reduce or eliminate errors in judgment made by public safety officers (for example, dispatchers) manually allocating public safety resources when handling, for example, an emergency call.

One embodiment provides an electronic computing device including a network interface configured to receive a data feed from a network-connectable device. The data feed includes information related to a public safety incident. The electronic computing device further includes an electronic processor configured to determine an incident type of the public safety incident based on the information included in the data feed. The electronic processor is further configured to determine one or more public safety parameters associated with the network-connectable device. The electronic processor is further configured to determine a trust score for the data feed as a function of at least one of the one or more public safety parameters associated with the network-connectable device. The electronic processor is further configured to identify a public safety resource to respond to the public safety incident based on the trust score, the information included in the data feed, and the incident type. The electronic processor is further configured to provide a recommendation that the public safety resource respond to the public safety incident.

Another embodiment provides a method for recommending public safety resource allocation. The method includes receiving, via a network interface of an electronic computing device, a data feed from a network-connectable device. The data feed includes information related to a public safety incident. The method further includes determining, with an electronic processor of the electronic computing device, an incident type of the public safety incident based on the information included in the data feed. The method further includes determining, with the electronic processor, one or more public safety parameters associated with the network-connectable device. The method further includes determining, with the electronic processor, a trust score for the data feed as a function of at least one of the one or more public safety parameters associated with the network-connectable device. The method further includes identifying, with the electronic processor, a public safety resource to respond to the public safety incident based on the trust score, the information included in the data feed, and the incident type. The method further includes providing, via an output device of the electronic computing device, a recommendation that the public safety resource respond to the public safety incident.

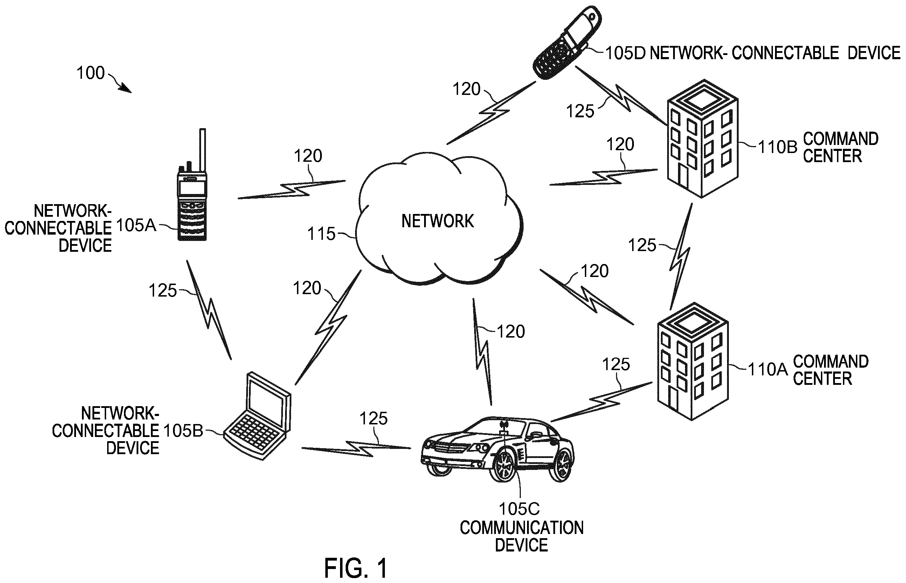

FIG. 1 is a block diagram of a communication system 100 according to one example embodiment. The communication system 100 includes various network-connectable devices 105A through 105D. In the following description, when explaining how a single network-connectable device functions, a reference to network-connectable device 105 is used. As indicated by FIG. 1, the network-connectable device 105 may be any one of a number of different types of network-connectable devices. For example, network-connectable device 105A is a portable communication device carried by an officer during patrol (for example, an employee of a theme park; a security guard at a concert or sporting event; a public safety officer on patrol or in the field such as police officer, firefighter, and paramedic; and the like). In some embodiments, network-connectable device 105A is a smart phone, a battery powered portable radio, a body wearable camera, a biometric sensor, or similar device. As another example, network-connectable device 105B is a laptop computer that can receive input from a user via a keyboard or touchscreen display or via a microphone (for example, voice commands). In other embodiments, network-connectable device 105B is a tablet, a desktop computer, or a similar device. As another example, network-connectable device 105C is a vehicular mobile communication device (for example, a police vehicle, a fire truck, an ambulance, a maintenance vehicle such as a tow truck, and the like). Network-connectable device 105C may include, but is not limited to, a dashboard camera, a microphone, a laptop, and the like. As yet another example, network-connectable device 105D is a smart phone operated by a civilian. Network-connectable device 105D may be any type of network-connectable device (for example, a laptop, desktop computer, tablet, smart watch, landline telephone, and the like).

The types of network-connectable devices 105A through 105D described above and shown in FIG. 1 are merely examples. In other embodiments, the communication system 100 includes other types of network-connectable devices. For example, an alarm system or other sensor or sensing system such as a fire alarm system, a toxic gas alarm system, or the like is a network-connectable device 105. In some embodiments, the communication system 100 includes more or fewer network-connectable devices 105 than the number of network-connectable devices 105 shown in FIG. 1.

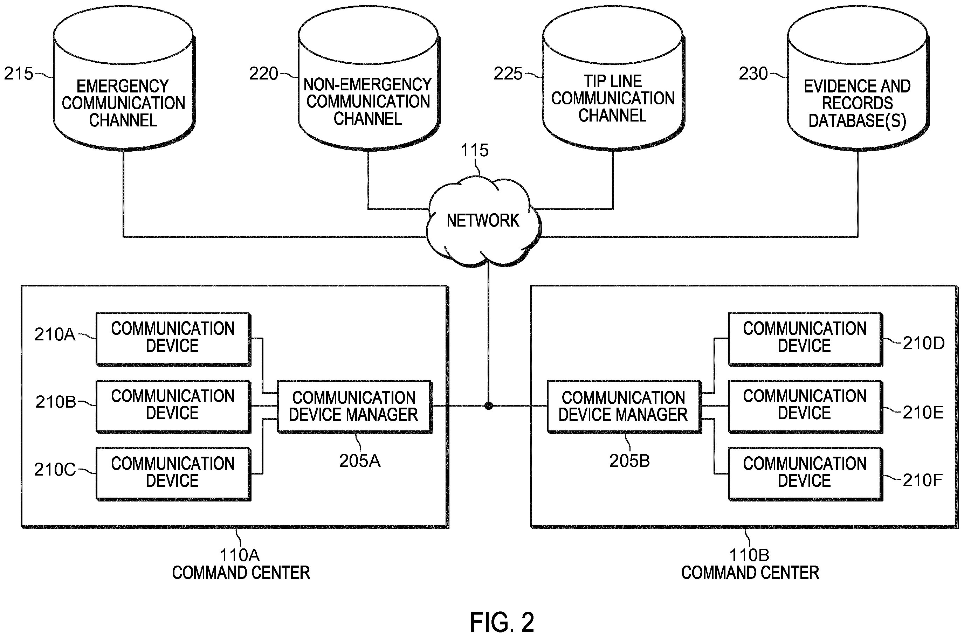

As shown in FIG. 1, the communication system 100 also includes various command centers 110A and 110B. In the following description, when explaining how a single command center functions, a reference to command center 110 is used. The command centers 110 may be any one of a number of different types of command centers. For example, the command center 110 is a security management office at a theme park or a public safety command center such as a police headquarters, fire station, dispatch center, public safety answering point (PSAP), operations center, command and control facility, and the like. In some embodiments, the command center 110 includes one or more network-connectable devices 105 that are part of the communication system 100 as explained below with respect to FIG. 2. In the following description, when explaining communication to or from the command center 110, it should be understood that such communication is occurring to or from one or more of the network-connectable devices 105 included in the command center 110. Although FIG. 1 illustrates two command centers 110, in some embodiments, the communication system 100 includes more or fewer command centers 110. In some embodiments as explained above, the communication system 100 includes a police station that is a command center 110A that handles tips received via a tip line communication channel and a dispatch center that is a command center 110B that handles emergency calls received via an emergency communication channel.

As indicated in FIG. 1, the network-connectable devices 105A through 105D and the command centers 110 may communicate with each other over a network 115 over respective wireless links 120 and via corresponding network interfaces including one or more transceiver circuits (for example, by sending and receiving radio signals). The network 115 may include wireless and wired portions. All or parts of the network 115 may be implemented using various existing networks, for example, a cellular network, the Internet, a land mobile radio (LMR) network, a Bluetooth^{™} network, a wireless local area network (for example, Wi-Fi), a wireless accessory Personal Area Network (PAN), a Machine-to-machine (M2M) autonomous network, and a public switched telephone network. The network 115 may also include future developed networks. In some embodiments, the network 115 may also include a combination of the networks mentioned.

Also as shown in FIG. 1, in some embodiments, the network-connectable devices 105A through 105D and the command centers 110 may communicate directly with each other via direct-mode wireless link(s) 125 using a communication channel or connection that is outside of the network 115. For example, the network-connectable devices 105A through 105D and the command centers 110 communicate directly with each other when they are within a predetermined distance from each other. Although FIG. 1 only shows direct-mode wireless links 125 between adjacent network-connectable devices 105 and command centers 110, in some embodiments, any one of the network-connectable devices 105 and the command centers 110 is capable of communicating with another network-connectable device 105 or the command centers 110 via a direct-mode wireless link 125.

FIG. 2 is a block diagram of the command centers 110A and 110B according to one example embodiment. In some embodiments, the command centers 110 include a communication device manager 205A and 205B, respectively, and a plurality of communication devices 210A through 210C and 210D through 210F, respectively, that are similar to and may be considered network-connectable devices 105 as explained above. In the following description, when explaining how a single device functions, referenced to communication device manager 205 and communication device 210 are used.

In some embodiments, the communication devices 210 are dispatch consoles (for example, computer-aided dispatch (CAD) devices) that are each operated by a separate dispatcher. For example, the dispatch consoles are public safety dispatch consoles that are each operated by a separate public safety dispatcher and that receive information such as emergency calls, non-emergency calls, tips, and the like via different communication channels. For example, the communication devices 210 receive one or more data feeds (for example, an audio feed such a voice call, a live or recorded video feed, an image feed, a text message, a sensor input data feed, and the like) related to an incident from a civilian, a police informant, and the like, and the dispatcher decides how to respond to the data feed to help the civilian and/or handle the reported incident. For example, the dispatcher may transfer the data feed to a different agency (for example, animal control), take no action (for example, when the data feed is a prank call or an accidental call), dispatch officers to the location of the incident, and the like.

In some embodiments, a data feed relates to an incident in which officers are supervising, maintaining, providing assistance, and the like (for example, a concert, a sporting event, management of a theme park or other entertainment venue, and the like). In some embodiments, the incident is an event, occurrence, or situation in which officers are involved. In some embodiments, the incident is a public safety incident in which public safety officers are called to a location to provide assistance in resolving or preventing a societal or environmental problem (for example, a location where a suspect is committing or has committed a crime, a fire, a vehicular accident, a traffic stop, a location where a natural disaster such as a tornado or earthquake has occurred, and the like). In some embodiments, public safety incidents include incidents involving public service agencies (for example, waste disposal agencies, water management agencies, and the like). In some embodiments, public safety officers include police officers, paramedics, firefighters, dispatchers, and the like. In some embodiments, public safety officers include public service employees employed by public service agencies.

FIG. 2 illustrates multiple different sources of information 215, 220, 225, and 230 accessible by the command centers 110. For example, a command center 110 may receive a data feed via an emergency communication channel 215 (for example, accessible by a civilian dialing 9-1-1 on a network-connectable device 105). A command center 110 may also receive a data feed via a non-emergency communication channel 220 (for example, accessible by a civilian dialing 3-1-1 on a network-connectable device 105). A command center 110 may also receive a data feed via a tip line communication channel 225 (for example, for receiving tips from civilians, police informants, and the like by dialing a specified number on a network-connectable device 105). As yet another example, a command center 110 may access an evidence and records database(s) 230 that may include public safety information such as criminal records, lists of people known to be associated with other people, call records including information related to previously-received data feeds, and the like. While the sources of information 215, 220, and 225 are referred to as communication channels, multiple different data feeds may be received simultaneously by the same or different command centers 110 via each communication channel 215, 220, and 225. For example, two civilians may place emergency calls that are handled by different dispatchers at command center 110A while another civilian places an emergency call that is handled by a dispatcher at command center 110B. In other words, the communication channels 215, 220, and 225 represent different public safety service platforms in which civilians, police informants, and the like may provide information to public safety agencies via their network-connectable devices 105.

In some embodiments, the communication device 210 of the dispatcher additionally or alternatively receives one or more data feeds from devices of officers handling the incident (for example, via a separate communication channel that is not shown in FIG. 2). In some embodiments, officers are personnel acting on behalf of a dispatching, supervising, or responsible agency/entity (for example, employees of a theme park; security guards at a concert or sporting event; public safety officers such as police officers, firefighters, and paramedics; and the like). As an example of the communication device 210 receiving data feeds from devices of officers, the communication device 210 of the dispatcher receives a video feed or an image feed from one or more of a camera of a network-connectable device 105 such as a smart telephone, a dash camera of a vehicle, and a body-worn camera of an officer. As another example, the communication device 210 of the dispatcher receives a data feed from a biometric sensor that monitors biometric data of an officer. In some embodiments, the communication device 210 receives data feeds from network-connectable devices 105 that are not operated by a citizen or an officer. For example, the communication device 210 receives a data feed from one or more of a security camera, a traffic camera, an alarm system that monitors a building (for example, a fire alarm, a toxic gas alarm, and the like), and the like.

In some embodiments, the communication device manager 205 is communicatively coupled to the network 115 and to the communication devices 210A through 210C via wired connections, wireless connections, or a combination thereof. As explained in greater detail below, the communication device manager 205 is configured to receive one or more data feeds from one or more of network-connectable devices 105 over the network 115. In some embodiments, the communication device manager 205 is configured to control which received data feeds are provided to which communication devices 210. In some embodiments, the communication devices 210 are configured to communicate through the communication device manager 205 to one or more network-connectable devices 105 over the network 115. In some embodiments, the communication device manager 205 is configured to receive information from other command centers 110 that relates to the data feeds received by the other command centers 110. For example, the communication device manager 205A communicates with another communication device manager 205B of a different command center 110 over the network 115 as indicated by FIG. 2. In some embodiments, the communication device manager 205A determines that separate data feeds received at the command center 110A and at the command center 110B relate to the same public safety incident as described in greater detail below. In embodiments where the communication system 100 includes additional command centers 110, the communication device managers 205 of each command center 110 may be able to communicate with each other, for example, over the network 115.

While FIG. 2 shows the communication devices 210 and the communication device manager 205 as separate devices, in some embodiments, the communication devices 210 are integrated into the communication device manager 205 and directly controlled by the communication device manager 205. In other embodiments, the command center 110 may not include a separate communication device manager 205 and the functionality of the communication device manager 205 described below may be integrated into each of the communication devices 210. In some embodiments, the command center 110 includes more or fewer communication devices 210 than the number of communication devices 210 shown in FIG. 2.

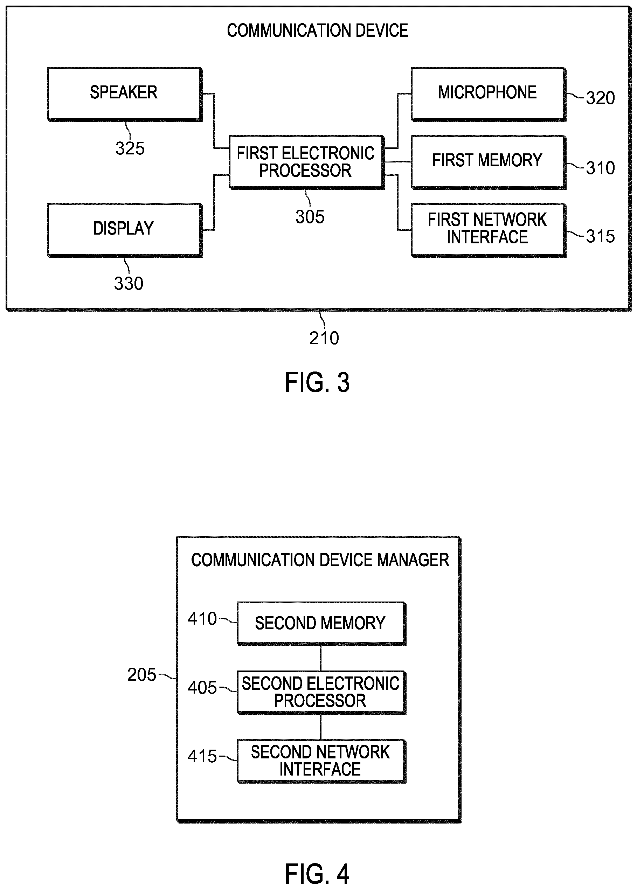

FIG. 3 is a block diagram of a communication device 210 according to one example embodiment. In the embodiment illustrated, the communication device 210 includes a first electronic processor 305 (for example, a microprocessor or other electronic device). The first electronic processor 305 includes input and output interfaces (not shown) and is electrically coupled to a first memory 310, a first network interface 315, a microphone 320, a speaker 325, and a display 330. In some embodiments, the communication device 210 includes fewer or additional components in configurations different from that illustrated in FIG. 3. For example, the communication device 210 may additionally include a push-to-talk button or a camera. As another example, the communication device 210 may include one or more additional input devices such as a computer mouse and/or a keyboard that receive inputs from a user of the communication device 210. As yet another example, the communication device 210 may be an information-receiving device that receives and displays information without including data transmission capabilities. In some embodiments, the communication device 210 performs functionality other than the functionality described below.

The first memory 310 may include read only memory (ROM), random access memory (RAM), other non-transitory computer-readable media, or a combination thereof. The first electronic processor 305 is configured to receive instructions and data from the first memory 310 and execute, among other things, the instructions. In particular, the first electronic processor 305 executes instructions stored in the first memory 310 to perform the methods described herein.

The first network interface 315 sends and receives data to and from the communication device manager 205. In some embodiments, the first network interface 315 additionally or alternatively sends and receives data to and from the network 115 without the data first passing through a separate communication device manager 205. In some embodiments, the first network interface 315 includes one or more transceivers for wirelessly communicating with the communication device manager 205 and/or the network 115. Alternatively or in addition, the first network interface 315 may include a connector or port for receiving a wired connection to the communication device manager 205 and/or the network 115, such as an Ethernet cable. The first electronic processor 305 may receive one or more data feeds (for example, a video feed, an audio feed, an image feed, a text feed, a sensor input data feed, and the like) over the network 115 through the first network interface 315 (for example, data feeds generated by one or more network-connectable devices 105 and transmitted over the network 115). In some embodiments, the first electronic processor 305 receives data feeds through the first network interface 315 directly from a network-connectable device 105. In some embodiments, communication of data feeds may occur in approximately real-time. The first electronic processor 305 may communicate data generated by the communication device 210 over the network 115 through the first network interface 315, such as for receipt by one or more network-connectable devices 105. For example, the first electronic processor 305 receives electrical signals representing sound from the microphone 320 and may communicate information relating to the electrical signals over the network 115 through the first network interface 315 to other devices, for example, to one or more network-connectable devices 105. Similarly, the first electronic processor 305 may output the one or more data feeds received from the network 115 through the first network interface 315, for example, from a network-connectable device 105, through the speaker 325, the display 330, or a combination thereof.

The display 330 displays images, video, text, and/or data from sensor inputs to the user (for example, a dispatcher). The display 330 may be a liquid crystal display (LCD) screen or an organic light emitting display (OLED) display screen. In some embodiments, a touch sensitive input interface may be incorporated into the display 330 as well, allowing the user (for example, a dispatcher) to interact with content provided on the display 330. In some embodiments, the display 330 includes a projector or future-developed display technologies. In some embodiments, the speaker 325 and the display 330 are referred to as output devices that present data feeds and other information to a user of the communication device 210 (for example, a dispatcher). In some embodiments, the microphone 320, a computer mouse, and/or a keyboard or a touch-sensitive display are referred to as input devices that receive input from a user of the communication device 210.

In some embodiments, the network-connectable devices 105 include similar components as those shown in FIG. 3 with respect to the communication device 210. In some embodiments, the network-connectable devices 105 include fewer or additional components in configurations different from that illustrated in FIG. 3. For example, a network-connectable device 105 may also include one or more of a push-to-talk button to initiate voice communication over the network 115 (in other words, an audio feed), a camera to capture a video feed and/or an image feed to be transmitted over the network 115, and a location component (for example, a global positioning system receiver) configured to determine the geographic coordinates of the location of the network-connectable device 105. In some embodiments, the network-connectable devices 105 transmit their respective location coordinates over the network 115 when transmitting data feeds to the command center 110 (for example, location information is stored as metadata associated with a data feed). Similarly, in some embodiments, the network-connectable devices 105 also include a time stamp when transmitting a data feed such that the command center 110 may determine a time associated with the data feed (for example, a time of capture of the data feed, a time of transmission of the data feed, and the like). In some embodiments, the network-connectable devices 105 transmit data feeds that include metadata with identification information that allows a receiving communication device manager 205 to determine an identity of the entity who owns the network-connectable device 105. In some embodiments, the network-connectable devices 105 transmit a text feed over the network 115 to the command center 110 (for example, a text message from a smart phone, portable radio, or the like).

In some embodiments, a network-connectable device 105 also includes one or more sensors to generate data related to a user of the network-connectable device 105 and/or an environment of the network-connectable device 105. For example, the network-connectable device 105 may include a biometric sensor to monitor biometric data of a user (for example, a citizen, an officer such as a public safety officer, and the like) such as heart rate, breathing rate, body temperature, and the like. As another example, the network-connectable device 105 may include a pedometer, a sensor-enabled holster to detect when a weapon has been removed from the holster, and/or a sensor that detects when the weapon has been discharged. As yet another example, the network-connectable device 105 may include one or more sensors that monitor an environment of the user such as temperature, humidity, air quality, ambient noise level, and the like.

In some embodiments, one or more sensors may communicate over the network 115 and may, themselves, be considered network-connectable devices 105. In other embodiments, one or more sensors are separate from a network-connectable device 105, and the separate sensors are not capable of directly communicating over the network 115. In such embodiments, the separate sensors (for example, a sensor-enabled holster) may communicate over the network 115 via a network-connectable device 105 (for example, a nearby smart phone, portable radio, and the like). For example, such separate sensors form a personal area network (PAN) with the network-connectable device 105 via corresponding short-range PAN transceivers, which may be based on a Bluetooth, Zigbee, Bluetooth Low Energy, WiFi, Near Field Communication (NFC), Radio Frequency ID (RFID) or other short-range wireless protocol. In such embodiments, the combination of the network-connectable device 105 and associated separate sensors that communicate monitored data to the network-connectable device 105 may be referred to as a single network-connectable device 105. In some embodiments, the network-connectable devices 105 transmit one or more sensor input data feeds over the network 115 to the command center 110, for example, to be displayed on a communication device 210 of a dispatcher. In some embodiments, the network-connectable devices 105 perform functionality other than the functionality described above.

FIG. 4 is a block diagram of the communication device manager 205 according to one example embodiment. In the example shown, the communication device manager 205 includes a second electronic processor 405 electrically connected to a second memory 410 and a second network interface 415. These components are similar to the like-named components of the communication device 210 explained above with respect to FIG. 3 and function in a similar manner as described above. In some embodiments, the second network interface 415 sends and receives data to and from the network 115 and the communication devices 210. As explained in greater detail below, in some embodiments, the second electronic processor 405 is configured to monitor and analyze received data feeds from the network-connectable devices 105 (for example, an audio feed of a voice call that is provided to one of the communication devices 210). In some embodiments, the communication device manager 205 includes fewer or additional components in configurations different from that illustrated in FIG. 4. For example, the communication device manager 205 may additionally include a display such as a touch screen to allow a user to reprogram settings or rules of the methods described below. In some embodiments, the communication device manager 205 performs functionality other than the functionality described below.

While FIGS. 3 and 4 show separate block diagrams of the communication device 210 and the communication device manager 205, as noted above, in some embodiments, the communication devices 210 are integrated into the communication device manager 205 and directly controlled by one or more electronic processors of the communication device manager 205. In other embodiments, the functionality of the communication device manager 205 may be integrated into each of the communication devices 210. In some embodiments, the communication device manager 205, the communication devices 210, a remote cloud-computing cluster that communicates over or forms a part of the network 115, and/or a combination thereof are referred to an electronic computing device that performs the functionality described below. For example, the electronic computing device may be a single electronic processor (for example, the second electronic processor 405 of the communication device manager 205) or a plurality of electronic processors located in the communication device manager 205. In other embodiments, the electronic computing device includes multiple electronic processors distributed across different devices. For example, the electronic computing device is implemented on one or more of the first electronic processors 305 of the communication devices 210, the second electronic processor 405 of the communication device manager 205, and one or more electronic processors located in one or more other devices located at the command center 110, at a remote location, or at a remote cloud-computing cluster that communicates over or forms a part of the network 115.

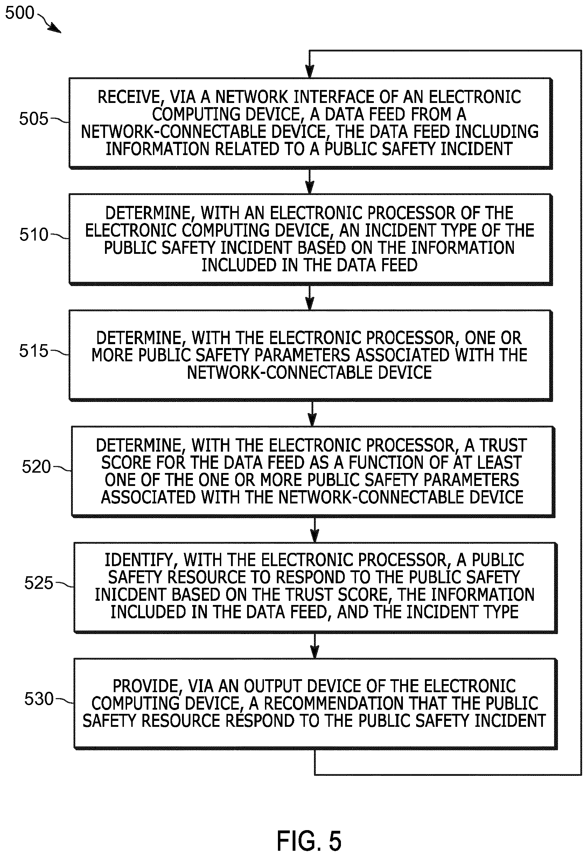

To address the above-noted technological problems, the electronic computing device described above performs, in one instance, one or more of the methods explained below. For example, a method 500 of FIG. 5 is executed by the electronic computing device to determine a trust score for received data feeds, determine which public safety resources to allocate based on the trust score of a data feed, and provide a recommendation that the public safety resource respond to the public safety incident. The method 500 addresses the above-noted technological problems by using a set of rules to perform public safety resource allocation in a systematic and efficient manner. For example, through the use of the sets of rules during the method 500, the electronic computing device systematically determines which received information to use when allocating public safety resources and also recommends and/or assigns public safety resource allocation. Additionally, by performing the method 500, the electronic computing device may reduce or eliminate errors in judgment made by public safety officers (for example, dispatchers) manually allocating public safety resources when handling, for example, an emergency call.

FIG. 5 illustrates a flow chart of the method 500 performed by the electronic computing device for providing a recommendation regarding which public safety resources to allocate to handle a public safety incident based on a trust score of a received data feed. While a particular order of processing steps, message receptions, and/or message transmissions is indicated in FIG. 5 as an example, timing and ordering of such steps, receptions, and transmissions may vary where appropriate without negating the purpose and advantages of the examples set forth in detail throughout the remainder of this disclosure.

At block 505, the electronic computing device receives a data feed from a network-connectable device 105. As explained above, the data feed (for example, a video feed, an audio feed, an image feed, a text feed, a sensor input data feed, and the like) includes information related to a public safety incident. For example, the data feed is an audio feed that is a voice call from a network-connectable device 105 of a civilian reporting a public safety incident such as a fire, robbery, drug activity, and the like.

At block 510, the electronic computing device determines an incident type of the public safety incident associated with the data feed based on the information included in the data feed. In some embodiments, the electronic computing device determines an incident type of the incident by analyzing the content included in a received data feed, such as keywords extracted from the data feed itself and metadata included in the data feed. For example, the electronic computing device filters received data feeds into keywords that summarize the received data feeds.

With respect to data feeds received from network-connectable devices 105 of civilians, the electronic computing device may use a natural language processing engine to recognize keywords spoken by a caller during a call (for example, "gas leak," "fire," and the like). As another example, the electronic computing device uses text recognition techniques to recognize keywords included in a text message (for example, "robbery," "bomb," and the like). In some embodiments, the electronic computing device uses image/video recognition techniques to categorize image feeds and/or video feeds by analyzing the content of images/videos. For example, the electronic computing device determines that a received video feed includes flames in the windows of a building and, based on this determination, associates a keyword of "fire" with the received video feed.

With respect to data feeds received from a sensor or an alarm notification system (in other words, a sensor input data feed), the electronic computing device may determine an incident type of the incident based on the type of alarm system and the location of the alarm system. In some embodiments, such information is included in metadata received with the data feed. For example, a received sensor input data feed may include information that indicates that the data feed was received from a fire alarm at a building located at 123 Main Street. Based on this metadata, the electronic computing device determines that the incident type of the public safety incident is a fire.

In some embodiments, the electronic computing device determines the incident type of the public safety incident based on a user input. For example, a communication device 210 of a dispatcher may receive the data feed (for example, a voice call from a caller) and receive a user input from the dispatcher that indicates an incident type of the incident about which the caller is calling.

In some embodiments, the electronic computing device determines that separate data feeds received at the same command center 110 or at different command centers 110 relate to the same public safety incident based on at least one of the content included in each data feed, a location from which each data feed was received, and a time associated with each data feed. For example, in addition to determining a type of incident, the electronic computing device may determine a location of the incident by analyzing keywords extracted from the data feed and/or metadata included in the data feed (for example, an address of the incident as spoken by a caller or a location from which the data feed was transmitted as indicated by metadata). In some embodiments, in response to determining that multiple data feeds relate to an incident of the same type and at the same location, the electronic computing device determines that the multiple data feeds relate to the same public safety incident.

At block 515, the electronic computing device determines one or more public safety parameters associated with the network-connectable device 105 from which the data feed was received. In some embodiments, a public safety parameter is a characteristic of the network-connectable device 105 and/or its user that the electronic computing device uses to determine a trust score for the data feed as described below. In some embodiments, a public safety parameter is a characteristic of the network-connectable device 105 and/or its user that indicates reliability or lack of reliability of the information included in the data feed. In some embodiments, public safety parameters include at least one of an accuracy of previous data feeds received from the network-connectable device 105, role information of a user associated with the network-connectable device 105, and a type of data feed provided by the network-connectable device 105. In some embodiments, public safety parameters additionally or alternatively include at least one of a location of the network-connectable device 105 with respect to a location of the public safety incident, a criminal record of a user associated with the network-connectable device 105, and an amount of additional data feeds received that include information related to the public safety incident. In some embodiments, public safety parameters additionally or alternatively include at least one of an association of the user of the network-connectable device 105 to people of interest (for example, fugitives) and/or people involved in the public safety incident, a level of detail of information included in the data feed, an accuracy of previous data feeds received from a geographical location, and a valid address of the network-connectable device 105 as compared against a geographic information system database. Examples of many of the above-mentioned public safety parameters are explained below with reference to determination of a trust score for the data feed at block 520.

In some embodiments, the electronic computing device determines one or more of the above-noted public safety parameters by accessing information stored on a local or remote memory. For example, the electronic computing device accesses, via the network 115, one or more databases that store information such as criminal records, data feed history information, and the like (for example, the evidence and records database(s) 230 of FIG. 2). In some embodiments, the electronic computing device accesses information stored in databases owned and/or maintained by third parties (for example, databases storing street address information, other location information, weather information, social media information, and the like).

At block 520, the electronic computing device determines a trust score for the data feed as a function at least one of the one or more public safety parameters determined at block 515. In some embodiments, the trust score indicates a level of reliability of the data feed (in other words, a likelihood that the data feed provides accurate information). For example, the trust score is a point value within a point system from one to one hundred where a trust score of fifty represents a baseline trust score that indicates that the data feed is neither reliable nor unreliable (in other words, neutral reliability). Continuing this example, a trust score below fifty indicates that the data feed may not be reliable (in other words, low reliability), and a trust score between fifty and seventy-five indicates that the data feed is reliable (in other words, average reliability). A trust score between seventy-five and one hundred may indicate that the data feed is highly reliable.

In some embodiments, when the electronic computing device receives a data feed, the electronic computing device determines an initial trust score for the data feed. In some embodiments, a public safety parameter that the electronic computing device uses to determine the initial trust score for the data feed is an accuracy of previous data feeds received from the network-connectable device 105, for example, as determined based on stored average trust scores of previously-received data feeds from the network-connectable device 105 (see Tables 1-3 below). For example, in a situation where a data feed is received from a network-connectable device 105 that has not previously provided a data feed, the electronic computing device determines an initial trust score of fifty points (or some other value as determined by each public safety agency) for the data feed because the electronic computing device does not have any stored trust scores of previous data feeds from the network-connectable device 105. As another example, in a situation where a data feed is received from a network-connectable device 105 that has previously provided one or more data feeds, the electronic computing device determines an initial trust score for the data feed based on stored average trust scores of previous data feeds received from the network-connectable device 105. For example, the electronic computing device determines an average trust score of data feeds previously provided by the network-connectable device 105 and uses the average trust score of the previously-provided data feeds as the initial trust score for the data feed.

In some embodiments, when determining the initial trust score of the data feed based on stored average trust scores of previously-provided data feeds from the network-connectable device 105, the electronic computing device uses different weights depending on the public safety service platform on which the previously-received data feeds were received (see Tables 1-3 below). For example, the electronic computing device may weigh previous data feeds received via the same public safety service platform as the currently-received data feed more heavily than previously-received data feeds received via a different public safety service platform as explained in further detail below with respect to Tables 1-3. In other words, the electronic computing device may store different average trust scores for previously-received data feeds from a network-connectable device 105 with respect to each type of public safety service platform. For example, with reference to Table 1, a network-connectable device 105 may have a stored average trust score of sixty for data feeds received via the emergency communication channel 215 and a stored trust score of fifty for data feeds received via the non-emergency communication channel 220. Accordingly, when the network-connectable device 105 provides a new data feed to the electronic computing device, the electronic computing device may determine that the initial trust score for the new data feed is higher when the new data feed is received via the emergency communication channel 215 than when the new data feed is received via the non-emergency communication channel 220. In some embodiments, the weights used by the electronic computing device to determine the initial trust score for received data feeds are adjustable via user inputs to allow different public safety agencies to select different weights to be used by the electronic computing device during determination of the trust score.

In some embodiments, the stored average trust scores used by the electronic computing device to determine an initial trust score for a newly-received data feed have been determined based on user input from public safety officers handling previously-reported incidents. For example, when previous data feeds from the network-connectable device 105 have been accurate as verified by public safety officers handling previously-reported incidents, the stored trust score for the network-connectable device 105 may be higher than when previous data feeds from the network-connectable device 105 were determined to be inaccurate as verified by public safety officers handling previously-reported incidents (for example, prank calls or erroneous details provided). In other words, after the electronic computing device determines a trust score for a data feed and stores the trust score for future use when data feeds are received from the same network-connectable device 105, public safety personnel such as a dispatcher may adjust the stored trust score by entering information regarding the accuracy of the information provided in the previously-provided data feed based on information received from public safety officers handling the previously-reported incident.

In some embodiments, the electronic computing device is configured to receive a reliability rating of a received data feed from an operator of the communication device 210 (for example, a dispatcher). In such embodiments, the electronic computing device is configured to provide, via an output device such as the display 330, the received data feed to an operator such as a dispatcher. The electronic computing device is configured to receive an input from the operator indicating a reliability rating of the data feed via an input device. For example, the reliability rating may indicate a number of points that are to be added to or subtracted from the trust score or may indicate a trust score that the dispatcher believes should be assigned to the data feed. The electronic computing device is configured to use the reliability rating as one of the one or more public safety parameters to determine a second trust score of a later-received data feed that is at least one of the group consisting of related to the same public safety incident as the current data feed and received from the same network-connectable device 105 as the current data feed. For example, the electronic computing device may access the reliability rating when determining a stored average trust score for use when determining an initial trust score of a later-received data feed from the same network-connectable device 105.

Although the above explanation refers to data feeds being received from a network-connectable device 105 and stored average trust scores of a network-connectable device 105, in some embodiments, the electronic computing device determines that data feeds are received from the same source or entity regardless of the network-connectable device 105 from which the data feeds were received. For example, the electronic computing device determines that data feeds have been received from the same source or entity when the data feeds have both been received from the same email address, Internet Protocol (IP) address, or the like (for example, as indicated by metadata of the data feed). In some embodiments, the electronic computing device determines stored average trust scores associated with the email address, IP address, or the like to determine an initial trust score for a currently-received data feed as described above.

In some embodiments, as a function of at least one other public safety parameter of the received data feed, the electronic computing device adjusts the initial trust score of the data feed to determine a trust score for the data feed (in other words, an overall trust score). Examples of how the electronic computing device may use a number of the public safety parameters mentioned above with respect to block 515 to determine the trust score for a data feed are provided below.

As an example of the electronic computing device using role information of the user associated with the network-connectable device 105 to determine the trust score for the data feed, the received data feed may include identification information of the entity who owns the network-connectable device 105 (for example, included in metadata). The electronic computing device may determine role information from this identification information. For example, the electronic computing device determines the entity who owns the network-connectable device 105 and details about the entity by accessing, via the network 115, one or more databases that store information of network-connectable devices 105. For example, the electronic computing device accesses a database that stores identification information of the network-connectable device 105 to determine a street address associated with the entity that owns the network-connectable device 105. The electronic computing device may then access another database that stores street address information to determine, for example, that the data feed has been received from a location where a person providing the data feed is likely to be trained in the medical field (for example, a voice call from a nursing home). Continuing this example, the electronic computing device may add three points to the trust score based on such a determination because a data feed from a nursing home that includes medical information (for example, indicating that a person is having heart attack) may be more reliable than other similar data feeds provided from network-connectable devices 105 of people without training in the medical field. As another example of the electronic computing device using role information of the user associated with the network-connectable device 105 to determine the trust score for the data feed, the electronic computing device may determine that the entity who provided the data feed is a known police informant with knowledge regarding drug activity. In response to such a determination, the electronic computing device may add five points to the trust score when the data feed includes information regarding drug activity.

As an example of the electronic computing device using a type of data feed to determine the trust score for the data feed, the electronic computing device may determine whether the data feed is solely an audio feed (for example, a voice call) or whether the data feed includes a video/image. In response to determining that the data feed includes a video/image, the electronic computing device may add five points to the trust score, for example, because the video/image may be less likely to provide false or inaccurate information than an audio feed (for example, verbal explanation from a caller). Additionally, the video/image may allow a dispatcher to verify the verbal explanation from the caller. In some embodiments, the electronic computing device may adjust the trust score based on a level of detail of information included in the data feed. For example, the electronic computing device adds more points to a trust score of a data feed that provides more details of an incident than to a data feed that provides fewer details of the incident. As another example, the electronic computing device adds more points to a trust score of a data feed provided from a body-worn camera of a police officer than to a data feed provided by a smartphone of a police officer or of a civilian because the data feed from the body-worn camera may be more secure (in other words, less susceptible to hacking and altered video feeds).

As an example of the electronic computing device using a location of the network-connectable device 105 with respect to a location of the public safety incident to determine the trust score for the data feed, the electronic computing device may determine a location of the network-connectable device 105 at the time the data feed was transmitted (for example, location information may be included in metadata of the data feed). The electronic computing device may compare the location of the network-connectable device 105 to a location of the incident to which the data feed relates because data feeds received from nearby an incident may be more reliable than data feeds received from further away from the incident. For example, the electronic computing device determines that an audio feed indicates that a caller states that there is a fire at a building with a street address of 123 Main Street. The electronic computing device may add five points to the trust score when the electronic computing device determines that the network-connectable device 105 is also located at 123 Main Street. The electronic computing device may add three points to the trust score when the electronic computing device determines that the network-connectable device 105 is located within, for example, one block of 123 Main Street. The electronic computing device may not adjust the trust score when the electronic computing device determines that the network-connectable device 105 is located more than one block away from 123 Main Street. The distance of one block is an example and may be a different distance with a different unit (for example, one hundred feet) in other embodiments. As another example, the electronic computing device may add more points to the trust score in response to determining that the network-connectable device 105 is located inside a bank during a bank robbery or inside a home during a domestic dispute than when the electronic computing device determines that the network-connectable device 105 is located outside of the bank or home.

As an example of the electronic computing device using a criminal record of a user associated with the network-connectable device 105 to determine the trust score for the data feed, the received data feed may include identification information of the entity who owns the network-connectable device 105 as explained above (for example, included in metadata). The electronic computing device may determine the entity who owns the network-connectable device 105 and details about the entity by accessing, via the network 115, one or more databases that store information of network-connectable devices 105 (for example, a criminal record database included in the evidence and records database(s) 230). When the criminal record of the user indicates that the user has provided false information to public safety agencies in the past, the electronic computing device may subtract five points from the trust score.

As an example of the electronic computing device using an amount of additional data feeds received that include information related to the public safety incident to determine the trust score for the data feed, the electronic computing device may determine whether any other data feeds received by the command center 110 or another command center 110 have been received that relate to the same incident as explained above. In some situations, the presence of multiple data feeds with similar information that relate to the same incident may indicate higher reliability of the data feeds than receipt of merely a single data feed related to the incident. For example, the electronic computing device may add one point to the trust score for each additional data feed that has been received that relates to the incident and that includes similar information as the received data feed.

As an example of the electronic computing device using an association of the user of the network-connectable device 105 to people of interest and/or people involved in the public safety incident to determine the trust score for the data feed, the electronic computing device may determine the entity who owns the network-connectable device 105 and details about the entity by accessing, via the network 115, one or more databases that store information of network-connectable devices 105 as explained above (for example, by accessing a known associates database, a social media database, a family information, and the like). When the information from one or more databases indicates that the user of the network-connectable device 105 is related to a victim located at the scene of an incident or otherwise is associated with a person involved in the incident, the electronic computing device may add three points to the trust score. For example, when a relative of a person engages in a phone call over the emergency communication channel 215 to report that the person is having a seizure, the information from the relative that the person is having a seizure may be more reliable than when the call is received from a person who does not know the person having the seizure (for example, due to the relative's past knowledge of the person's medical history who is having the seizure). Accordingly, the electronic computing device may add three points to the trust score in this situation.

As an example of the electronic computing device using an accuracy of previous data feeds received from a geographical location to determine the trust score for the data feed, the electronic computing device may determine a stored average trust score of data feeds previously received from the same approximate location from which the current data feed was received. For example, the electronic computing device determines that the current data feed was received from a network-connectable device 105 located in a shopping mall. The electronic computing device may also determine that a stored average trust score of previous data feeds received from network-connectable devices 105 located at the shopping mall has a low reliability (for example, due to frequent prank calls in the past). Accordingly, the electronic computing device may subtract three points from the trust score. As another example, when the data feed is received from a fire alarm notification system that has produced numerous false alarms in the past, the electronic computing device may subtract five points from the trust score.

As an example of the electronic computing device using a valid address of the network-connectable device 105 as compared against a geographic information system database to determine the trust score for the data feed, the electronic computing device determines whether identification information included in the data feed (for example, included in metadata) corresponds to location information of the network-connectable device 105. In other words, the electronic computing device determines whether the data feed is being sent from a network-connectable device 105 configured to transmit information that appears to be from another network-connectable device 105 (in other words, a spoofing attack). When the electronic computing device makes such a determination that the network-connectable device 105 is masquerading as another network-connectable device 105, the electronic computing device may subtract ten points from the trust score because such a determination indicates a lack of reliability. As another example, when the electronic computing device determines that a location of the network-connectable device 105 cannot be verified, the electronic computing device may subtract two points from the trust score.

Tables 1-3 below illustrate examples of the electronic computing device determining a trust score for three different received data feeds according to some of the embodiments/examples described above. In each of the below tables, the weighting used to determine an initial trust score of the data feed is adjusted by the electronic computing device depending on the public safety service platform over which the data feed was received. For example, a minimum weighting of stored average trust scores of previously-received data feeds from the network-connectable device 105 via the emergency communication channel 215 is 0.3. A minimum weighting of stored average trust scores of previously-received data feeds from the network-connectable device 105 via the non-emergency communication channel 220 or the tip line communication channel 225 is 0.1. In this example, the minimum weighting of stored average trust scores of previous data feeds from the network-connectable device 105 received via the emergency communication channel 215 is higher than for other public safety service platforms because data feeds previously received via the emergency communication channel 215 may have been previously analyzed in greater detail and may be supported by more detailed records than data feeds received via other public safety service platforms. In other words, the stored average trust score of data feeds received via the emergency communication channel 215 may be more vetted and reliable that the stored average trust score of data feeds received via other public safety service platforms.

As indicated by Tables 1-3, the electronic computing device adjusts the weighting depending on the public safety service platform over which the data feed is received. For example, the electronic computing device adds a weighting factor of 0.5 to the stored average trust score weighting of the respective public safety service platform. Accordingly, in the examples illustrated by Tables 1-3, the electronic computing device determines that previously-received data feeds from the same public safety service platform carry more weight in determining the initial trust score (and accordingly the trust score) than previously-received data feeds from other public safety service platforms. As indicated by the "X" and by the weighting factors in Table 1, the data feed corresponding to Table 1 is received via the emergency communication channel 215. The data feed corresponding to Table 2 is received via the non-emergency communication channel 220. The data feed corresponding to Table 3 is received via the tip line communication channel 225. With reference to Table 1, the electronic computing device determines the initial trust score based 80% on the stored average trust score of data feeds received via the emergency communication channel 215 because the received data feed was received via the emergency communication channel 215. However, with reference to Table 2, the electronic computing device determines the initial trust score based 30% on the stored average trust score of data feeds received via the emergency communication channel 215 because the received data feed was not received via the emergency communication channel 215.

As described above, the electronic computing device increases or decreases the initial trust score of the data feed based on public safety parameters of the data feed to calculate an overall trust score for the data feed. The public safety parameters and the increasing/decreasing amounts in Tables 1-3 are examples. In some embodiments, more or fewer public safety parameters may be analyzed by the electronic computing device to determine the overall trust score for the data feed.

| Table 1 | | | |
|---|---|---|---|
| Stored Average Trust Scores of Previously-Received Data Feeds: | Emergency | Non-Emergency | Tips |
| | 60 | 50 | 60 |
| Weighting (based on agency setting and public safety service platform over which data feed is received): | 0.8 | 0.1 | 0.1 |
| Initial Trust Score: | 59 | | |
| | | | |
| Public Safety Parameters of Received Data Feed: | X | | |
| Role information of a user associated with the network-connectable device | 0 | | |
| Type of data feed | 0 | | |
| Location of the network-connectable device with respect to a location of the public safety incident | 0 | | |
| Criminal record of a user associated with the network-connectable device | -3 | | |
| Additional data feeds received that include information related to the public safety incident | +2 | | |
| **Trust Score:** | 58 | | |

| Table 2 | | | |
|---|---|---|---|
| Stored Average Trust Scores of Previously-Received Data Feeds: | Emergency | Non-Emergency | Tips |
| | 60 | 50 | 60 |
| Weighting (based on agency setting and public safety service platform over which data feed is received): | 0.3 | 0.6 | 0.1 |
| Initial Trust Score: | | 54 | |
| | | | |
| Public Safety Parameters of Received Data Feed: | | X | |
| Role information of a user associated with the network-connectable device | | +5 | |
| Type of data feed | | +5 | |
| Location of the network-connectable device with respect to a location of the public safety incident | | +2 | |
| Criminal record of a user associated with the network-connectable device | | 0 | |
| Additional data feeds received that include information related to the public safety incident | | 0 | |
| **Trust Score:** | | 66 | |

| Table 3 | | | |
|---|---|---|---|
| Stored Average Trust Scores of Previously-Received Data Feeds: | Emergency | Non-Emergency | Tips |
| | 50 | 60 | 70 |
| Weighting (based on agency setting and public safety service platform over which data feed is received): | 0.3 | 0.1 | 0.6 |
| Initial Trust Score: | | | 63 |
| | | | |
| Public Safety Parameters of Received Data Feed: | | | X |
| Role information of a user associated with the network-connectable device | | | +3 |
| Type of data feed | | | 0 |
| Location of the network-connectable device with respect to a location of the public safety incident | | | 0 |
| Association of the user of the network-connectable device to people of interest | | | 0 |
| Accuracy of previous data feeds received from a geographical location | | | -5 |
| **Trust Score:** | | | 61 |

The public safety parameters explained above that are used by the electronic computing device to determine a trust score of a data feed are examples. In some embodiments, the electronic computing device uses additional public safety parameters to determine the trust score for a received data feed. In some embodiments, the electronic computing device is configured to determine the trust score based on one or more of public safety parameters as selected by a user. For example, different public safety agencies may configure the electronic computing device to use different public safety parameters when determining the trust score of received data feeds. Similarly, in some embodiments, the electronic computing device is configured to weigh at least some public safety parameters (including an accuracy of previous data feeds received from the network-connectable device 105 as used to determine the initial trust score) differently than others when determining the trust score of a data feed. For example, a type of data feed provided by the network-connectable device 105 (for example, an image/video feed) may have a higher weight in the determination of trust score than a distance of the network-connectable device 105 to the location of the incident. In some embodiments, the weights of each public safety parameter are user configurable such that different public safety agencies may customize how the trust score is determined as desired. For example, different public safety agencies may change the weighting (for example, the minimum weights corresponding to each public safety service platform) used in Tables 1-3 above.

The increases or decreases in point values of the trust score and the circumstances/ranges that cause the increases or decreases in the above examples are merely examples. In some embodiments, the increases or decreases in point values of the trust score and/or the circumstances/ranges that cause the increase or decrease are different. In some embodiments, the values of the trust score point system are different and the adjustments to the trust score based on public safety parameters are different. For example, different public safety agencies may change the amounts that the initial trust score is increased or decreased based on each public safety parameter. With respect to the above examples of the electronic computing device adjusting the trust score of a data feed, some examples may only explain an example increase or decrease of the trust score with respect to certain public safety parameters. However, the electronic computing device may be configured to increase and/or decrease the trust score based on each public safety parameter depending on the information corresponding to each public safety parameter.

In some embodiments, the trust score values that indicate low reliability, neutral reliability, average reliability, and high reliability may be different. In some embodiments, threshold values that indicate low reliability, neutral reliability, average reliability, and high reliability are different depending on the public safety platform over which a data feed was received. For example, a threshold of average reliability for a data feed received via the emergency communication channel 215 is lower than a threshold of average reliability for a data feed received via the non-emergency communication channel 220 because incidents reported via the emergency communication channel 215 may be more severe or urgent than incidents reported via the non-emergency communication channel 220. The lower average reliability threshold in this example may cause the electronic computing device to treat data feeds as more reliable when data feeds are received regarding an emergency incident than when data feeds are received regarding a non-emergency incident. For example, the electronic computing device may determine that a data feed with a trust score of forty-five has low reliability when the data feed was received via the non-emergency communication channel 220. However, the electronic computing device may determine that a data feed with a trust score of forty-five has an average reliability when the data feed was received via the emergency communication channel 215.

At block 525, the electronic computing device identifies a public safety resource to respond to the public safety incident based on the trust score, the information included in the data feed, and the incident type. In some embodiments, the public safety resource is a public safety officer on patrol or in the field such as a police officer, a firefighter, a paramedic, and the like. In some embodiments, the public safety officer has certain skills (for example, sharp shooter, bomb diffusing capability, and the like) or has undergone certain training (for example, trained to handle a police dog, trained to handle a hostage situation, specialized training in narcotics, and the like). In some embodiments, the public safety resource is a tool or vehicle that is used by public safety officers when handling an incident (for example, a fire truck, an ambulance, a hydraulic rescue tool, a defibrillator, and the like).

In some embodiments, the electronic computing device analyzes the information/content included in the data feed in the process of identifying a public safety resource to respond to the public safety incident. For example, the electronic computing device uses a natural language processing engine to analyze information provided by a caller during a voice call. As another example, the electronic computing device uses text recognition techniques to analyze information included in a text message received from a network-connectable device 105 of a civilian. The electronic computing device has also previously determined the incident type of the incident to which the data feed relates as described above with respect to block 510.

As a first example of how the electronic computing device identifies a public safety resource to respond to the public safety incident based on the trust score, the information included in the data feed, and the incident type, the electronic computing device may determine that a received data feed includes information that indicates that there is a fire at a building located at 123 Main Street and that one person is trapped inside the building. The electronic computing device also determines that the incident type is a fire using the techniques described above with respect to block 510. The electronic computing device may also determine that the trust score of the data feed is above seventy-five points (in other words, highly reliable). Based on the above-noted information, the electronic computing device may identify two fire trucks and an ambulance (and corresponding firefighters and paramedics) to respond to the incident.

As a modified version of the first example, when the trust score for the data feed is fifty-five, the electronic computing device determines that the data feed has average reliability but is not highly reliable and, in fact, is closer to neutral reliability than high reliability. Accordingly, the electronic computing device may identify two fire trucks and two ambulances (and corresponding firefighters and paramedics) to respond to the incident because there may be more people trapped inside the building than are known to the user who provided the data feed.

As another modified version of the first example, when the trust score for the data feed is thirty, the electronic computing device determines that the data feed has low reliability. Accordingly, the electronic computing device may identify only one fire truck and one ambulance (and corresponding firefighters and paramedics) to respond to the incident because the data feed may be a prank or may otherwise be inaccurate. Thus, the electronic computing device may identify less public safety resources to respond to the incident until public safety officers at the scene of the incident are able to verify the details of the incident.

As another modified version of the first example, when the information provided in the data feed indicates that three people are trapped inside the building, the electronic computing device may identify two fire trucks and three ambulances (and corresponding firefighters and paramedics) to respond to the incident because each of the three people trapped inside the building may need to be transported in an ambulance and the data feed has a trust score indicating high reliability.

As another example with a different incident type, the electronic computing device may determine that a received data feed includes information that indicates that there is a robbery in progress at a bank. The electronic computing device may determine that the incident type is a robbery that possibly involves hostages using the techniques described above with respect to block 510. The electronic computing device may also determine that the trust score of the data feed is above seventy-five points (in other words, highly reliable). Based on the above-noted information, the electronic computing device may identify six police officers and a hostage negotiator to respond to the incident. However, as a modified version of this example, when the trust score is below fifty points (in other words, low reliability), the electronic computing device may only identify two police officers to respond to the incident because the data feed may be a prank or may otherwise be inaccurate. Thus, the electronic computing device may identify less public safety resources to respond to the incident until public safety officers at the scene of the incident are able to verify the details of the incident.

As one more example with a different incident type, the electronic computing device may determine that a received data feed includes information that indicates that there is drug activity in progress at 456 First Street. The electronic computing device may determine that the incident type is an illegal use and/or sale of drugs using the techniques described above with respect to block 510. The electronic computing device may also determine that the trust score of the data feed is above seventy-five points (in other words, highly reliable). Based on the above-noted information, the electronic computing device may identify a police dog and two police officers that have received specialized training in narcotics to respond to the incident. However, as a modified version of this example, when the trust score is below fifty points (in other words, low reliability), the electronic computing device may only identify one or two officers that are not specially trained in narcotics to respond to the incident because the data feed may be inaccurate. Thus, the electronic computing device may identify less public safety resources to respond to the incident until public safety officers at the scene of the incident are able to verify the details of the incident.

As illustrated by some of the above-noted examples, in some embodiments, the electronic computing device is configured to identify one or more public safety resources to respond to the public safety incident by comparing the trust score to a threshold and determining that the trust score is greater than the threshold (for example, a high reliability threshold of seventy-five points, an average reliability threshold of fifty points, or the like). In response to determining that the trust score is greater than the threshold, the electronic computing device identifies a first group of public safety officers to respond to the public safety incident (for example, the six police officers and a hostage negotiator in the above bank robbery example or the police dog and two police officers that have received specialized training in narcotics in the above drug activity example). The electronic computing device may also be configured to determine that the trust score is less than or equal to the threshold. In response to determining that the trust score is less than or equal to the threshold, the electronic computing device identifies a second group of public safety officers to respond to the public safety incident (for example, the two police officers in the above modified bank robbery example or the one or two police officers that are not specially trained in narcotics in the above modified drug activity example). As illustrated by the examples of the first and second groups of public safety officers, in some situations, a first amount of public safety officers in the first group is greater than a second amount of public safety officers in the second group. Additionally or alternatively, a first skill set rating of public safety officers in the first group is higher than a second skill set rating of public safety officers in the second group. Thus, the electronic computing device may identify less public safety resources and/or public safety resources without specialized training specifically relevant to a reported incident to respond to the incident until public safety officers at the scene of the incident are able to verify the details of the incident.

In some embodiments, the electronic computing device is configured to identify one or more public safety resources to respond to the public safety incident as a function of an availability of a plurality of public safety resources. For example, with reference to the modified version of the above drug activity example, the electronic computing device may determine that there are eight officers specially trained in narcotics that are on patrol within a predetermined distance from the incident. Because of the high availability of such officers in the area, the electronic computing device may identify two officers specially trained in narcotics to respond to the incident even when the trust score of the received data feed indicates that the data feed has a low reliability. As another example, with reference to the above bank robbery example, the electronic computing device may only recommend four police officers (instead of six police officers) and a hostage negotiator when an amount of police officers available to assist with the incident is low (for example, due to police officers handling other incidents).

At block 530, the electronic computing device provides a recommendation that the identified public safety resource(s) respond to the public safety incident. In some embodiments, the electronic computing device provides the recommendation to a dispatcher via an output device such as the speaker 325 and/or the display 330 of a communication device 210 operated by the dispatcher. In some situations, such a recommendation is used by the dispatcher to assign public safety resources to handle the incident by, for example, the dispatcher using the communication device 210 to communicate instructions to public safety officers on patrol in the field. In some embodiments, the electronic computing device is configured to assign the identified one or more public safety resources to respond to the public safety incident rather than merely providing a recommendation to the dispatcher to do so. For example, the electronic computing device enters a public safety resource identification against an incident identification in fields shown on the display 330 of the communication device 210 of a dispatcher. In such embodiments, the electronic computing device transmits a notification to a second network-connectable device 105 associated with the public safety resource indicating that the public safety resource has been assigned to respond to the public safety incident. The notification may also include details of the public safety incident (for example, incident type, location, brief description of the incident as determined based on analysis of a received data feed, and the like). In some embodiments, the electronic computing device also provides a notification via an output device of the communication device 210 of the dispatcher to indicate to the dispatcher the assignment of the public resource by the electronic computing device.

As indicated by FIG. 5, after executing block 530, the method 500 returns to block 505 to repeat the method 500 for additional received data feeds. Thus, by executing the method 500, the electronic computing device may determine a trust score for a data feed based on one or more public safety parameters associated with multiple received data feeds. In some embodiments, a network interface of the electronic computing device (for example, first network interface 315) is configured to receive a plurality of data feeds from a plurality of network-connectable devices 105. In some embodiments, the plurality of data feeds are received from different public safety service platforms including at least two of the group consisting of an emergency communication channel 215, a non-emergency communication channel 220, and a tip line communication channel 230. In some embodiments, the plurality of data feeds are received by one or more command centers 110 as described previously herein.

In embodiments where a plurality of data feeds are received from a plurality of network-connectable devices 105, the electronic computing device may determine that each data feed of the plurality of data feeds is related to the public safety incident based on content included in each data feed. For example, based on natural language processing of each data feed, the electronic computing device determines that each data feed relates to a fire at 123 Main Street. The electronic computing device may determine one or more public safety parameters associated with each network-connectable device 105 of the plurality of network-connectable devices 105. As a function of the one or more public safety parameters associated with each network-connectable device 105, the electronic computing device may determine a second trust score for a later-received data feed of the plurality of data feeds. In other words and as explained above, the presence of multiple data feeds with similar information that relate to the same incident may indicate higher reliability of the data feeds than receipt of merely a single data feed related to the incident. For example, the electronic computing device may add one point to the trust score for each additional data feed that has been received that relates to the incident and that includes similar information as the received data feed. Based on the second trust score, the electronic computing device may identify the public safety resource to respond to the public safety incident as explained above with respect to block 525. In some embodiments, the electronic computing device increases a stored trust score of a previously-received data feed in response to receiving additional data feeds with similar information that relate to the same incident (for example, because the additional data feeds corroborate the previously-received data feed and indicate that the previously-received data feed may have been more reliable than its stored trust score initially indicated).

In the foregoing specification, specific embodiments have been described. However, one of ordinary skill in the art appreciates that various modifications and changes may be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a," "has ...a," "includes ...a," or "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment may be implemented as a computer-readable storage medium having computer readable code stored thereon for programming a computer (for example, comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it may be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. An electronic computing device comprising:
a network interface (315, 415) configured to receive a data feed from a network-connectable device (105), wherein the data feed includes information related to a public safety incident;
an electronic processor (305, 405) configured to
determine an incident type of the public safety incident based on the information included in the data feed,
determine one or more public safety parameters associated with the network-connectable device (105),
determine a trust score for the data feed as a function of at least one of the one or more public safety parameters associated with the network-connectable device (105),
identify a public safety resource to respond to the public safety incident based on the trust score, the information included in the data feed, and the incident type, and
provide a recommendation that the public safety resource respond to the public safety incident;
wherein the electronic processor (305, 405) being configured to identify the public safety resource by:
comparing the trust score to a threshold;
determining that the trust score is greater than the threshold;
in response to determining that the trust score is greater than the threshold, identifying a first group of public safety officers to respond to the public safety incident;
determining that the trust score is less than or equal to the threshold; and
in response to determining that the trust score is less than or equal to the threshold, identifying a second group of public safety officers to respond to the public safety incident, wherein at least one of
a first amount of public safety officers in the first group is greater than a second amount of public safety officers in the second group, and
a first skill set rating of public safety officers in the first group is higher than a second skill set rating of public safety officers in the second group.

2. The electronic computing device of claim 1, wherein the electronic processor (305, 405) is configured to:
assign the public safety resource to respond to the public safety incident; and
transmit, via the network interface (315, 415), a notification to a second network-connectable device (105) associated with the public safety resource, wherein the notification indicates that the public safety resource has been assigned to respond to the public safety incident.

3. The electronic computing device of claim 1, wherein the network interface (315, 415) is configured to receive a plurality of data feeds from a plurality of network-connectable devices (105);
wherein the electronic processor (305, 405) is configured to
determine that each data feed of the plurality of data feeds is related to the public safety incident based on content included in each data feed,
determine one or more public safety parameters associated with each network-connectable device (105),
determine a second trust score for a later-received data feed as a function of the one or more public safety parameters associated with each network-connectable device (105), and
identify the public safety resource to respond to the public safety incident based on the second trust score.

4. The electronic computing device of claim 3, wherein the plurality of data feeds are received from different public safety service platforms including at least two of the group consisting of an emergency communication channel (215), a non-emergency communication channel (220), and a tip line communication channel (225).

5. The electronic computing device of claim 1, wherein the data feed includes at least one of the group consisting of a video feed, an audio feed, an image feed, a text feed, and a sensor input data feed.

6. The electronic computing device of claim 1, wherein the one or more public safety parameters include at least one of an accuracy of previous data feeds received from the network-connectable device (105), role information of a user associated with the network-connectable device (105), and a type of data feed.

7. The electronic computing device of claim 1, wherein the one or more public safety parameters include at least one of a location of the network-connectable device (105) with respect to a location of the public safety incident, a criminal record of a user associated with the network-connectable device (105), and an amount of additional data feeds received that include information related to the public safety incident.

8. The electronic computing device of claim 1, wherein the electronic processor (305, 405) is further configured to identify the public safety resource to respond to the public safety incident as a function of an availability of a plurality of public safety resources.

9. The electronic computing device of claim 1, wherein the electronic processor (305, 405) is further configured to:
provide, via an output device (325, 330), the data feed to an operator of the electronic computing device;
receive an input from the operator via an input device (320), the input indicating a reliability rating of the data feed, and
use the reliability rating as one of the one or more public safety parameters to determine a second trust score of a later-received data feed that is at least one of the group consisting of related to the public safety incident and received from the network-connectable device (105).

10. A method for recommending public safety resource allocation, the method comprising:
receiving, via a network interface (315, 415) of an electronic computing device, a data feed from a network-connectable device (105), the data feed including information related to a public safety incident;
determining, with an electronic processor (305, 405) of the electronic computing device, an incident type of the public safety incident based on the information included in the data feed,
determining, with the electronic processor (305, 405), one or more public safety parameters associated with the network-connectable device (105),
determining, with the electronic processor (305, 405), a trust score for the data feed as a function of at least one of the one or more public safety parameters associated with the network-connectable device (105),
identifying, with the electronic processor (305, 405), a public safety resource to respond to the public safety incident based on the trust score, the information included in the data feed, and the incident type, and
providing, via an output device (325, 330) of the electronic computing device, a recommendation that the public safety resource respond to the public safety incident;
wherein the identifying of the public safety resource further including
comparing, with the electronic processor (305, 405), the trust score to a threshold; determining, with the electronic processor (305, 405), that the trust score is greater than the threshold;
in response to determining that the trust score is greater than the threshold, identifying, with the electronic processor (305, 405), a first group of public safety officers to respond to the public safety incident;
determining, with the electronic processor (305, 405), that the trust score is less than or equal to the threshold; and
in response to determining that the trust score is less than or equal to the threshold, identifying, with the electronic processor (305, 405), a second group of public safety officers to respond to the public safety incident, wherein at least one of
a first amount of public safety officers in the first group is greater than a second amount of public safety officers in the second group, and
a first skill set rating of public safety officers in the first group is higher than a second skill set rating of public safety officers in the second group.

11. The method of claim 10, further comprising:
assigning, with the electronic processor (305, 405), the public safety resource to respond to the public safety incident; and
transmitting, via the network interface (315, 415), a notification to a second network-connectable device (105) associated with the public safety resource, the notification indicating that the public safety resource has been assigned to respond to the public safety incident.

12. The method of claim 10, further comprising:
receiving, via the network interface (315, 415), a plurality of data feeds from a plurality of network-connectable devices (105);
determining, with the electronic processor (305, 405), that each data feed of the plurality of data feeds is related to the public safety incident based on content included in each data feed,
determining, with the electronic processor (305, 405), one or more public safety parameters associated with each network-connectable device (105),
determining, with the electronic processor (305, 405), a second trust score for a later-received data feed as a function of the one or more public safety parameters associated with each network-connectable device (105), and
identifying, with the electronic processor (305, 405), the public safety resource to respond to the public safety incident based on the second trust score.

13. The method of claim 10, further comprising:
providing, via the output device (325, 330), the data feed to an operator of the electronic computing device;
receiving an input from the operator via an input device (320) of the electronic computing device, the input indicating a reliability rating of the data feed, and
using, with the electronic processor (305, 405), the reliability rating as one of the one or more public safety parameters to determine a second trust score of a later-received data feed that is at least one of the group consisting of related to the public safety incident and received from the network-connectable device (105).

## Patentansprüche

1. Elektronische Rechenvorrichtung, umfassend:
eine Netzwerkschnittstelle (315, 415), ausgelegt zum Empfangen eines Datenfeeds von einer mit einem Netzwerk verbindbaren Vorrichtung (105), wobei der Datenfeed Informationen bezüglich eines Öffentliche-Sicherheit-Vorfalls beinhaltet;
einen elektronischen Prozessor (305, 405), ausgelegt zum
Bestimmen einer Vorfallart des Öffentliche-Sicherheit-Vorfalls basierend auf den in dem Datenfeed enthaltenen Informationen,
Bestimmen eines oder mehrerer Öffentliche-Sicherheit-Parameter, die mit der mit einem Netzwerk verbindbaren Vorrichtung (105) assoziiert sind,
Bestimmen einer Vertrauensbewertung für den Datenfeed als Funktion mindestens eines des einen oder der mehreren Öffentliche-Sicherheit-Parameter, die mit der mit einem Netzwerk verbindbaren Vorrichtung (105) assoziiert sind,
Identifizieren einer Öffentliche-Sicherheit-Ressource zum Reagieren auf den Öffentliche-Sicherheit-Vorfall basierend auf der Vertrauensbewertung, den in dem Datenfeed enthaltenen Informationen und der Vorfallart und
Bereitstellen einer Empfehlung, dass die Öffentliche-Sicherheit-Ressource auf den Öffentliche-Sicherheit-Vorfall reagiert;
wobei der elektronische Prozessor (305, 405) ausgelegt ist zum Identifizieren der Öffentliche-Sicherheit-Ressource durch:
Vergleichen der Vertrauensbewertung mit einem Schwellenwert;
Bestimmen, dass die Vertrauensbewertung größer als der Schwellenwert ist;
als Reaktion auf das Bestimmen, dass die Vertrauensbewertung größer als der Schwellenwert ist, Identifizieren einer ersten Gruppe von Öffentliche-Sicherheit-Beamten zum Reagieren auf den Öffentliche-Sicherheit-Vorfall;
Bestimmen, dass die Vertrauensbewertung kleiner oder gleich dem Schwellenwert ist; und
als Reaktion auf das Bestimmen, dass die Vertrauensbewertung kleiner oder gleich dem Schwellenwert ist, Identifizieren einer zweiten Gruppe von Öffentliche-Sicherheit-Beamten zum Reagieren auf den Öffentliche-Sicherheit-Vorfall, wobei
eine erste Anzahl von Öffentliche-Sicherheit-Beamten in der ersten Gruppe größer als eine zweite Anzahl von Öffentliche-Sicherheit-Beamten in der zweiten Gruppe ist und/oder
eine erste Kompetenzbewertung von Öffentliche-Sicherheit-Beamten in der ersten Gruppe höher als eine zweite Kompetenzbewertung von Öffentliche-Sicherheit-Beamten in der zweiten Gruppe ist.

2. Elektronische Rechenvorrichtung nach Anspruch 1, wobei der elektronische Prozessor (305, 405) ausgelegt ist zum:
Zuweisen der Öffentliche-Sicherheit-Ressource zum Reagieren auf den Öffentliche-Sicherheit-Vorfall; und
Übertragen, über die Netzwerkschnittstelle (315, 415), einer Benachrichtigung an eine zweite mit einem Netzwerk verbindbare Vorrichtung (105), die mit der Öffentliche-Sicherheit-Ressource assoziiert ist, wobei die Benachrichtigung angibt, dass die Öffentliche-Sicherheit-Ressource zum Reagieren auf den Öffentliche-Sicherheit-Vorfall zugewiesen wurde.

3. Elektronische Rechenvorrichtung nach Anspruch 1, wobei die Netzwerkschnittstelle (315, 415) ausgelegt ist zum Empfangen mehrerer Datenfeeds von mehreren mit einem Netzwerk verbindbaren Vorrichtungen (105);
wobei der elektronische Prozessor (305, 405) ausgelegt ist zum
Bestimmen, dass jeder Datenfeed der mehreren Datenfeeds mit dem Öffentliche-Sicherheit-Vorfall in Zusammenhang steht, basierend auf in jedem Datenfeed enthaltenem Inhalt,
Bestimmen eines oder mehrerer Öffentliche-Sicherheit-Parameter, die mit jeder mit einem Netzwerk verbindbaren Vorrichtung (105) assoziiert sind,
Bestimmen einer zweiten Vertrauensbewertung für einen später empfangenen Datenfeed als Funktion des einen oder der mehreren Öffentliche-Sicherheit-Parameter, die mit jeder mit einem Netzwerk verbindbaren Vorrichtung (105) assoziiert sind, und
Identifizieren der Öffentliche-Sicherheit-Ressource zum Reagieren auf den Öffentliche-Sicherheit-Vorfall basierend auf der zweiten Vertrauensbewertung.

4. Elektronische Rechenvorrichtung nach Anspruch 3, wobei die mehreren Datenfeeds von verschiedenen Öffentliche-Sicherheit-Dienstplattformen empfangen werden, darunter mindestens zwei aus der Gruppe bestehend aus einem Notfallkommunikationskanal (215), einem Nicht-Notfallkommunikationskanal (220) und einem Hinweiskommunikationskanal (225).

5. Elektronische Rechenvorrichtung nach Anspruch 1, wobei der Datenfeed mindestens eines aus der Gruppe bestehend aus einem Videofeed, einem Audiofeed, einem Bildfeed, einem Textfeed und einen Sensoreingangsdatenfeed beinhaltet.

6. Elektronische Rechenvorrichtung nach Anspruch 1, wobei der eine oder die mehreren Öffentliche-Sicherheit-Parameter eine Genauigkeit vorheriger Datenfeeds, die von der mit einem Netzwerk verbindbaren Vorrichtung (105) empfangen wurden, und/oder Funktionsinformationen eines Benutzers, der mit der mit einem Netzwerk verbindbaren Vorrichtung (105) assoziiert ist, und/oder eine Art eines Datenfeeds beinhalten.

7. Elektronische Rechenvorrichtung nach Anspruch 1, wobei der eine oder die mehreren Öffentliche-Sicherheit-Parameter einen Standort der mit einem Netzwerk verbindbaren Vorrichtung (105) bezüglich eines Orts des Öffentliche-Sicherheit-Vorfalls und/oder Vorstrafen eines Benutzers, der mit der mit einem Netzwerk verbindbaren Vorrichtung (105) assoziiert ist, und/oder eine Anzahl zusätzlicher empfangener Datenfeeds, die Informationen bezüglich des Öffentliche-Sicherheit-Vorfalls beinhalten, beinhalten.

8. Elektronische Rechenvorrichtung nach Anspruch 1, wobei der elektronische Prozessor (305, 405) ferner ausgelegt ist zum Identifizieren der Öffentliche-Sicherheit-Ressource zum Reagieren auf den Öffentliche-Sicherheit-Vorfall als Funktion einer Verfügbarkeit mehrerer Öffentliche-Sicherheit-Ressourcen.

9. Elektronische Rechenvorrichtung nach Anspruch 1, wobei der elektronische Prozessor (305, 405) ferner ausgelegt ist zum:
Bereitstellen, über eine Ausgabevorrichtung (325, 330), des Datenfeeds an einen Betreiber der elektronischen Rechenvorrichtung;
Empfangen einer Eingabe von dem Betreiber über eine Eingabevorrichtung (320), wobei die Eingabe eine Zuverlässigkeitseinstufung des Datenfeeds angibt, und
Verwenden der Zuverlässigkeitseinstufung als einen des einen oder der mehreren Öffentliche-Sicherheit-Parameter zum Bestimmen einer zweiten Vertrauensbewertung eines später empfangenen Datenfeeds, der mindestens eines aus der Gruppe bestehend aus mit dem Öffentliche-Sicherheit-Vorfall in Zusammenhang stehend und von der mit einem Netzwerk verbindbaren Vorrichtung (105) empfangen ist.

10. Verfahren zum Empfehlen einer Zuweisung einer Öffentliche-Sicherheit-Ressource, wobei das Verfahren Folgendes umfasst: Empfangen, über eine Netzwerkschnittstelle (315, 415) einer elektronischen Rechenvorrichtung, eines Datenfeeds von einer mit einem Netzwerk verbindbaren Vorrichtung (105), wobei der Datenfeed Informationen bezüglich eines Öffentliche-Sicherheit-Vorfalls beinhaltet;
Bestimmen, mit einem elektronischen Prozessor (305, 405) der elektronischen Rechenvorrichtung, einer Vorfallart des Öffentliche-Sicherheit-Vorfalls basierend auf den in dem Datenfeed enthaltenen Informationen,
Bestimmen, mit dem elektronischen Prozessor (305, 405), eines oder mehrerer Öffentliche-Sicherheit-Parameter, die mit der mit einem Netzwerk verbindbaren Vorrichtung (105) assoziiert sind,
Bestimmen, mit dem elektronischen Prozessor (305, 405), einer Vertrauensbewertung für den Datenfeed als Funktion mindestens eines des einen oder der mehreren Öffentliche-Sicherheit-Parameter, die mit der mit einem Netzwerk verbindbaren Vorrichtung (105) assoziiert sind,
Identifizieren, mit dem elektronischen Prozessor (305, 405), einer Öffentliche-Sicherheit-Ressource zum Reagieren auf den Öffentliche-Sicherheit-Vorfall basierend auf der Vertrauensbewertung, den in dem Datenfeed enthaltenen Informationen und der Vorfallart und
Bereitstellen, über eine Ausgabevorrichtung (325, 330) der elektronischen Rechenvorrichtung, einer Empfehlung, dass die Öffentliche-Sicherheit-Ressource auf den Öffentliche-Sicherheit-Vorfall reagiert;
wobei das Identifizieren der Öffentliche-Sicherheit-Ressource ferner Folgendes beinhaltet:
Vergleichen, mit dem elektronischen Prozessor (305, 405), der Vertrauensbewertung mit einem Schwellenwert; Bestimmen, mit dem elektronischen Prozessor (305, 405), dass die Vertrauensbewertung größer als der Schwellenwert ist;
als Reaktion auf das Bestimmen, dass die Vertrauensbewertung größer als der Schwellenwert ist, Identifizieren, mit dem elektronischen Prozessor (305, 405), einer ersten Gruppe von Öffentliche-Sicherheit-Beamten zum Reagieren auf den Öffentliche-Sicherheit-Vorfall;
Bestimmen, mit dem elektronischen Prozessor (305, 405), dass die Vertrauensbewertung kleiner oder gleich dem Schwellenwert ist; und
als Reaktion auf das Bestimmen, dass die Vertrauensbewertung kleiner oder gleich dem Schwellenwert ist, Identifizieren, mit dem elektronischen Prozessor (305, 405), einer zweiten Gruppe von Öffentliche-Sicherheit-Beamten zum Reagieren auf den Öffentliche-Sicherheit-Vorfall, wobei
eine erste Anzahl von Öffentliche-Sicherheit-Beamten in der ersten Gruppe größer als eine zweite Anzahl von Öffentliche-Sicherheit-Beamten in der zweiten Gruppe ist und/oder
eine erste Kompetenzbewertung von Öffentliche-Sicherheit-Beamten in der ersten Gruppe höher als eine zweite Kompetenzbewertung von Öffentliche-Sicherheit-Beamten in der zweiten Gruppe ist.

11. Verfahren nach Anspruch 10, ferner umfassend:
Zuweisen, mit dem elektronischen Prozessor (305, 405), der Öffentliche-Sicherheit-Ressource zum Reagieren auf den Öffentliche-Sicherheit-Vorfall; und
Übertragen, über die Netzwerkschnittstelle (315, 415), einer Benachrichtigung an eine zweite mit einem Netzwerk verbindbare Vorrichtung (105), die mit der Öffentliche-Sicherheit-Ressource assoziiert ist, wobei die Benachrichtigung angibt, dass die Öffentliche-Sicherheit-Ressource zum Reagieren auf den Öffentliche-Sicherheit-Vorfall zugewiesen wurde.

12. Verfahren nach Anspruch 10, ferner umfassend:
Empfangen, über die Netzwerkschnittstelle (315, 415), mehrerer Datenfeeds von mehreren mit einem Netzwerk verbindbaren Vorrichtungen (105);
Bestimmen, mit dem elektronischen Prozessor (305, 405), dass jeder Datenfeed der mehreren Datenfeeds mit dem Öffentliche-Sicherheit-Vorfall in Zusammenhang steht, basierend auf in jedem Datenfeed enthaltenem Inhalt,
Bestimmen, mit dem elektronischen Prozessor (305, 405), eines oder mehrerer Öffentliche-Sicherheit-Parameter, die mit jeder mit einem Netzwerk verbindbaren Vorrichtung (105) assoziiert sind,
Bestimmen, mit dem elektronischen Prozessor (305, 405), einer zweiten Vertrauensbewertung für einen später empfangenen Datenfeed als Funktion des einen oder der mehreren Öffentliche-Sicherheit-Parameter, die mit jeder mit einem Netzwerk verbindbaren Vorrichtung (105) assoziiert sind, und
Identifizieren, mit dem elektronischen Prozessor (305, 405), der Öffentliche-Sicherheit-Ressource zum Reagieren auf den Öffentliche-Sicherheit-Vorfall basierend auf der zweiten Vertrauensbewertung.

13. Verfahren nach Anspruch 10, ferner umfassend:
Bereitstellen, über die Ausgabevorrichtung (325, 330), des Datenfeeds an einen Betreiber der elektronischen Rechenvorrichtung;
Empfangen einer Eingabe von dem Betreiber über eine Eingabevorrichtung (320) der elektronischen Rechenvorrichtung, wobei die Eingabe eine Zuverlässigkeitseinstufung des Datenfeeds angibt, und
Verwenden, mit dem elektronischen Prozessor (305, 405), der Zuverlässigkeitseinstufung als einen des einen oder der mehreren Öffentliche-Sicherheit-Parameter zum Bestimmen einer zweiten Vertrauensbewertung eines später empfangenen Datenfeeds, der mindestens eines aus der Gruppe bestehend aus mit dem Öffentliche-Sicherheit-Vorfall in Zusammenhang stehend und von der mit einem Netzwerk verbindbaren Vorrichtung (105) empfangen ist.

## Revendications

1. Dispositif informatique électronique comprenant :
une interface réseau (315, 415) configurée pour recevoir une alimentation en données depuis un dispositif pouvant être connecté à un réseau (105), l'alimentation en données comprenant des informations relatives à un incident de sécurité publique ;
un processeur électronique (305, 405) configuré pour
déterminer un type d'incident de l'incident de sécurité publique sur la base des informations incluses dans le flux de données,
déterminer un ou plusieurs paramètres de sécurité publique associés au dispositif pouvant être connecté à un réseau (105),
déterminer un score de confiance pour le flux de données en fonction d'au moins un du ou des paramètres de sécurité publique associés au dispositif pouvant être connecté à un réseau (105),
identifier une ressource de sécurité publique pour répondre à l'incident de sécurité publique sur la base du score de confiance, des informations incluses dans le flux de données et du type d'incident, et
fournir une recommandation pour que la ressource de sécurité publique réponde à l'incident de sécurité publique ;
le processeur électronique (305, 405) étant configuré pour identifier la ressource de sécurité publique par
la comparaison du score de confiance à un seuil ;
la détermination que le score de confiance est supérieur au seuil ;
en réponse à la détermination que le score de confiance est supérieur au seuil, l'identification d'un premier groupe d'agents de sécurité publique pour répondre à l'incident de sécurité publique ;
la détermination que le score de confiance est inférieur ou égal au seuil ; et
en réponse à la détermination du fait que le score de confiance est inférieur ou égal au seuil, l'identification d'un second groupe d'agents de sécurité publique pour répondre à l'incident de sécurité publique, avec au moins l'une des conditions suivantes :
une première quantité d'agents de sécurité publique dans le premier groupe est supérieure à une seconde quantité d'agents de sécurité publique dans le second groupe, et
une première évaluation d'ensemble de compétences des agents de sécurité publique dans le premier groupe est supérieure à une seconde évaluation d'ensemble de compétences des agents de sécurité publique dans le second groupe.

2. Dispositif informatique électronique selon la revendication 1, le processeur électronique (305, 405) étant configuré pour :
attribuer la ressource de sécurité publique pour répondre à l'incident de sécurité publique ; et
transmettre, par l'intermédiaire de l'interface réseau (315, 415), une notification à un second dispositif pouvant être connecté à un réseau (105) associé à la ressource de sécurité publique, la notification indiquant que la ressource de sécurité publique a été attribuée pour répondre à l'incident de sécurité publique.

3. Dispositif informatique électronique selon la revendication 1, l'interface réseau (315, 415) étant configurée pour recevoir une pluralité de flux de données provenant d'une pluralité de dispositifs pouvant être connectés à un réseau (105) ;
le processeur électronique (305, 405) étant configuré pour
déterminer que chaque flux de données de la pluralité de flux de données est lié à l'incident de sécurité publique sur la base du contenu inclus dans chaque flux de données,
déterminer un ou plusieurs paramètres de sécurité publique associés à chaque dispositif pouvant être connecté à un réseau (105),
déterminer un second score de confiance pour un flux de données reçu ultérieurement en fonction du ou des paramètres de sécurité publique associés à chaque dispositif pouvant être connecté à un réseau (105), et
identifier la ressource de sécurité publique pour répondre à l'incident de sécurité publique sur la base du second score de confiance.

4. Dispositif informatique électronique selon la revendication 3, la pluralité de flux de données étant reçue de différentes plates-formes de service de sécurité publique comprenant au moins deux du groupe constitué d'un canal de communication d'urgence (215), d'un canal de communication de non-urgence (220) et d'un canal de communication de ligne d'appel (225).

5. Dispositif informatique électronique selon la revendication 1, le flux de données comprenant au moins un élément du groupe constitué d'un flux vidéo, d'un flux audio, d'un flux d'images, d'un flux de texte et d'un flux de données d'entrée de capteur.

6. Dispositif informatique électronique selon la revendication 1, le ou les paramètres de sécurité publique comprenant au moins l'un d'une précision des flux de données précédents reçus du dispositif pouvant être connecté à un réseau (105), des informations de rôle d'un utilisateur associé au dispositif pouvant être connecté à un réseau (105), et d'un type de flux de données.

7. Dispositif informatique électronique selon la revendication 1, le ou les paramètres de sécurité publique comprenant au moins l'un d'un emplacement du dispositif pouvant être connecté à un réseau (105) par rapport à un emplacement de l'incident de sécurité publique, d'un casier judiciaire d'un utilisateur associé au dispositif pouvant être connecté à un réseau (105), et d'une quantité de flux de données supplémentaires reçus qui comprennent des informations liées à l'incident de sécurité publique.

8. Dispositif informatique électronique selon la revendication 1, le processeur électronique (305, 405) étant en outre configuré pour identifier la ressource de sécurité publique pour répondre à l'incident de sécurité publique en fonction d'une disponibilité d'une pluralité de ressources de sécurité publique.

9. Dispositif informatique électronique selon la revendication 1, le processeur électronique (305, 405) étant en outre configuré pour :
fournir, par l'intermédiaire d'un dispositif de sortie (325, 330), le flux de données à un opérateur du dispositif informatique électronique ;
recevoir une entrée de l'opérateur par l'intermédiaire d'un dispositif d'entrée (320), l'entrée indiquant une note de fiabilité de l'alimentation en données, et
utiliser la note de fiabilité comme l'un du ou des paramètres de sécurité publique pour déterminer un second score de confiance d'un flux de données reçu ultérieurement qui est au moins l'un du groupe constitué d'un flux lié à l'incident de sécurité publique et d'un flux reçu du dispositif pouvant être connecté à un réseau (105) .

10. Procédé pour recommander l'allocation de ressources de sécurité publique, le procédé comprenant : la réception, par l'intermédiaire d'une interface de réseau (315, 415) d'un dispositif informatique électronique, d'une alimentation en données provenant d'un dispositif pouvant être connecté à un réseau (105), l'alimentation en données comprenant des informations relatives à un incident de sécurité publique ;
la détermination, avec un processeur électronique (305, 405) du dispositif informatique électronique, d'un type d'incident de l'incident de sécurité publique sur la base des informations incluses dans le flux de données,
la détermination, avec le processeur électronique (305, 405), d'un ou plusieurs paramètres de sécurité publique associés au dispositif pouvant être connecté à un réseau (105),
la détermination, avec le processeur électronique (305, 405), d'un score de confiance pour le flux de données en fonction d'au moins un du ou des paramètres de sécurité publique associés au dispositif pouvant être connecté à un réseau (105),
l'identification, avec le processeur électronique (305, 405), d'une ressource de sécurité publique pour répondre à l'incident de sécurité publique sur la base du score de confiance, des informations incluses dans le flux de données et du type d'incident, et
la fourniture, par l'intermédiaire d'un dispositif de sortie (325, 330) du dispositif informatique électronique, d'une recommandation que la ressource de sécurité publique réponde à l'incident de sécurité publique ;
l'identification de la ressource de sécurité publique comprenant en outre :
la comparaison, avec le processeur électronique (305, 405), du score de confiance à un seuil ; la détermination, avec le processeur électronique (305, 405), que le score de confiance est supérieur au seuil ;
en réponse à la détermination que le score de confiance est supérieur au seuil, l'identification, avec le processeur électronique (305, 405), d'un premier groupe d'agents de sécurité publique pour répondre à l'incident de sécurité publique ;
la détermination, avec le processeur électronique (305, 405), que le score de confiance est inférieur ou égal au seuil ; et
en réponse à la détermination du fait que le score de confiance est inférieur ou égal au seuil, l'identification, avec le processeur électronique (305, 405), d'un second groupe d'agents de sécurité publique pour répondre à l'incident de sécurité publique, avec au moins l'une des conditions suivantes :
une première quantité d'agents de sécurité publique dans le premier groupe est supérieure à une seconde quantité d'agents de sécurité publique dans le second groupe, et
une première évaluation d'ensemble de compétences des agents de sécurité publique dans le premier groupe est supérieure à une seconde évaluation d'ensemble de compétences des agents de sécurité publique dans le second groupe.

11. Procédé selon la revendication 10, comprenant en outre :
l'attribution, avec le processeur électronique (305, 405), de la ressource de sécurité publique pour répondre à l'incident de sécurité publique ; et
la transmission, par l'intermédiaire de l'interface réseau (315, 415), d'une notification à un second dispositif pouvant être connecté à un réseau (105) associé à la ressource de sécurité publique, la notification indiquant que la ressource de sécurité publique a été attribuée pour répondre à l'incident de sécurité publique.

12. Procédé selon la revendication 10, comprenant en outre :
la réception, par l'intermédiaire de l'interface réseau (315, 415), d'une pluralité de flux de données provenant d'une pluralité de dispositifs pouvant être connectés à un réseau (105) ;
la détermination, avec le processeur électronique (305, 405), que chaque flux de données de la pluralité de flux de données est lié à l'incident de sécurité publique sur la base du contenu inclus dans chaque flux de données,
la détermination, avec le processeur électronique (305, 405), d'un ou plusieurs paramètres de sécurité publique associés à chaque dispositif pouvant être connecté à un réseau (105),
la détermination, avec le processeur électronique (305, 405), d'un second score de confiance pour un flux de données reçu ultérieurement en fonction du ou des paramètres de sécurité publique associés à chaque dispositif pouvant être connecté à un réseau (105), et
l'identification, avec le processeur électronique (305, 405), de la ressource de sécurité publique pour répondre à l'incident de sécurité publique sur la base du second score de confiance.

13. Procédé selon la revendication 10, comprenant en outre :
la fourniture, par l'intermédiaire du dispositif de sortie (325, 330), du flux de données à un opérateur du dispositif informatique électronique ;
la réception d'une entrée de l'opérateur par l'intermédiaire d'un dispositif d'entrée (320) du dispositif informatique électronique, l'entrée indiquant une note de fiabilité de l'alimentation en données, et
l'utilisation, avec le processeur électronique (305, 405), de la note de fiabilité comme l'un du ou des paramètres de sécurité publique pour déterminer un second score de confiance d'un flux de données reçu ultérieurement qui est au moins l'un du groupe constitué d'un flux lié à l'incident de sécurité publique et d'un flux reçu du dispositif pouvant être connecté à un réseau (105) .
